Europäisches Patentamt

European Patent Office

Office européen des brevets

(11) Publication number: **0 149 069**
**A2**

## (12) EUROPEAN PATENT APPLICATION

(21) Application number: **84114287.0**

(22) Date of filing: **26.11.84**

(51) Int. Cl.⁴: **G 09 G 1/00**
**B 41 J 3/02**

(30) Priority: **30.11.83 JP 225748/83**

(43) Date of publication of application:
**24.07.85 Bulletin 85/30**

(84) Designated Contracting States:
**DE FR GB SE**

(71) Applicant: **Kabushiki Kaisha Toshiba**
**72, Horikawa-cho Saiwai-ku**
**Kawasaki-shi Kanagawa-ken 210(JP)**

(72) Inventor: **Shiota, Keiichi c/o Patent Division**
**Kabushiki Kaisha Toshiba 1-1 Shibaura 1-chome**
**Minato-ku Tokyo 105(JP)**

(74) Representative: **Henkel, Feiler, Hänzel & Partner**
**Möhlstrasse 37**
**D-8000 München 80(DE)**

(54) Character dot pattern processing device and method in character output apparatus.

(57) A character dot pattern processing device in a character output apparatus of the invention has a read-only memory (ROM) (22) and/or a random-access memory (RAM) (24) for storing a character dot pattern, the size of the character dot pattern and the printing output width. The character dot pattern processing device also has a microcomputer (20, 21) for adding predetermined space patterns to the two sides of the character dot pattern and for supplying the pattern to a printer in accordance with the character output width stored in the ROM (22) and/or the RAM (24).

FIG. 3

EP 0 149 069 A2

- 1 -

Character dot pattern processing device and
method in character output apparatus

The present invention relates to a character dot
pattern processing device for generating a character dot
pattern to output apparatuses such as a printer, a
display unit and the like.

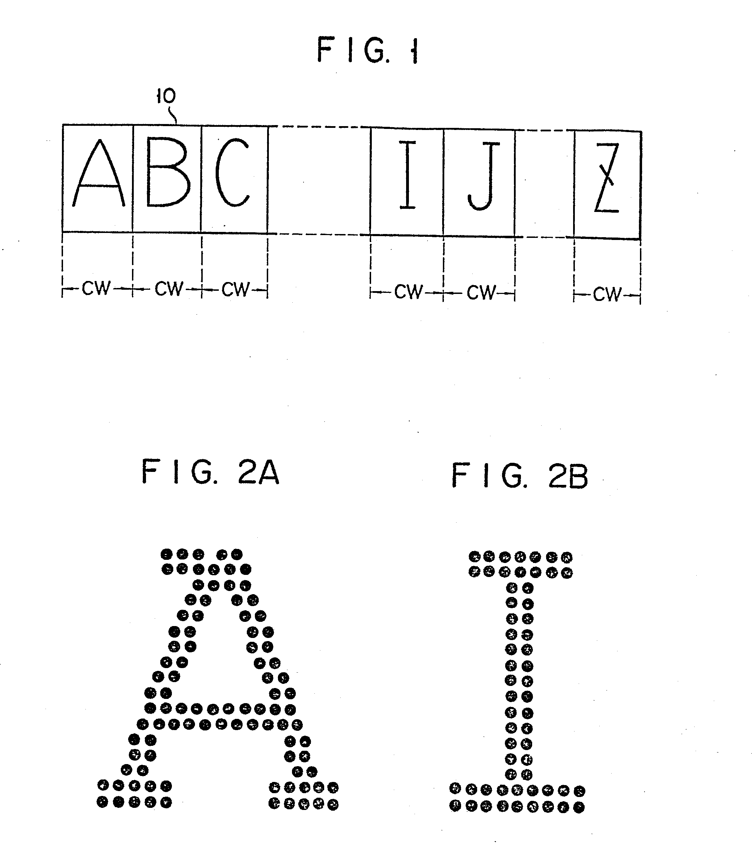

Generally, in dot printers, a predetermined
character is printed in accordance with a character dot
pattern consisting of a dot matrix.  In dot printers of
this type, dot patterns corresponding to respective
character codes are stored in, for example, a read only
memory (ROM) 10.  In this case, respective characters
have the same character pattern size (character width)
CW.  Addresses corresponding to predetermined character
patterns are determined by multiplying the designated
character codes and the character pattern size.  A dot
printer supplies the address data to the ROM 10, and
reads out corresponding character dot patterns shown in
Figs. 2A and 2B, thereby performing printing.

English letters include characters having dot
patterns mainly at their centers (e.g., "I," "J," and
the like) as shown in Fig. 2B.  When such characters are
printed, spaces are provided at both sides (or one side)
of the dot pattern.  For this reason, dot patterns
including space data are stored in the ROM 10, resulting
in an undesirable increase in the dot pattern storing area. Particularly, when a character pattern of high density consisting of a large number of dots is stored in a memory, a memory having a large capacity is required.

It is an object of the present invention to provide a character dot pattern processing device wherein, in an apparatus which performs printing or displaying in accordance with a character dot pattern stored in a memory, the character dot pattern is stored in a minimum size in a memory, thereby considerably reducing the dot pattern storing area.

In order to achieve the above object of the present invention, there is provided a character dot pattern processing device in a character output apparatus, comprising:

read only memory means for storing a character dot pattern consisting of only a dot pattern which constitutes a character, a width of the character dot pattern, and a character output width when the character dot pattern is supplied to said character output apparatus; and

controlling means for adding predetermined space dot patterns at two sides of the character dot pattern stored in said read only memory in accordance with the character output width stored in said read only memory, and supplying the character dot pattern having the space dot patterns at the two sides thereof to said character output apparatus.

According to the present invention, in the character dot pattern processing operation used in printers or displays, character dot patterns including minimum character dot patterns and desired spaces can be easily created by a memory for printing or displaying. Therefore, character dot patterns having a minimum size can be stored in a character dot pattern memory for storing character dot patterns for printing or displaying. For this reason, the character dot pattern storing area of the character dot pattern memory can be considerably reduced, resulting in an efficient use of the memory.

Since an output character width for printing or displaying including a space can be easily set by a buffer memory, control of proportional spacing can be easily performed.

Other objects and features of the present invention will be apparent from the following description taken in consideration with the accompanying drawings, in which:

Fig. 1 is a view showing an example of a character dot pattern stored in a memory in a conventional printer;

Figs. 2A and 2B are views showing character dot patterns printed by the printer;

Fig. 3 is a block diagram showing an embodiment of the present invention;

Fig. 4 is a view showing printing patterns by a printer shown in Fig. 3;

Figs. 5A to 5C are views showing contents of respective tables in a RAM 24 of Fig. 3, and Fig. 5D is a view showing character patterns stored in a ROM 22 of Fig. 3;

Figs. 6A and 6B are flow charts explaining the operation according to this embodiment of the present invention in Fig. 3;

Fig. 7 is a view showing a printing pattern according to this embodiment of the present invention in Fig. 3; and

Fig. 8 is a printing data format when printing data is externally supplied in another embodiment of the present invention.

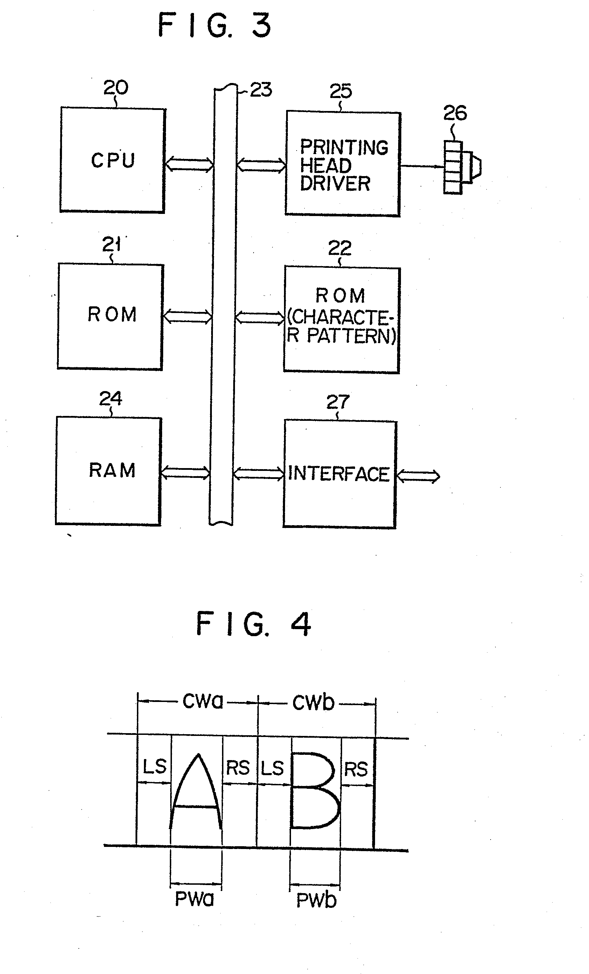

Fig. 3 is a block diagram showing a dot printer in which the present invention is adopted.  This printer comprises a character dot pattern memory 22 consisting of a ROM which stores dot patterns corresponding to respective character codes, an interface 27 for communicating with an external device, a random access memory (RAM) 24 having a reception buffer and a printing buffer for storing printing data supplied from the external device, a printing head driver 25 for driving a printing head 26, a central processing unit (CPU) 20 for controlling these respective units, and a ROM 21 for storing a control program necessary for the CPU 20 to perform a specific function. These units are connected by a bus 23. The character dot pattern memory 22 has a character dot pattern storing area, a start address storing area for storing start addresses of respective areas in which respective character dot patterns are stored, a printing width storing area of the respective character dot patterns, and a dot pattern size storing area of the respective character dot patterns. The CPU 20 can consist of a microprocessor, for example, an 8-bit microprocessor 8085A available from Intel Corp. (U.S.A.). When printing data including a character code is supplied from a host computer or the like (not shown) through the interface 27, the CPU 20 temporarily stores it in the reception buffer of the RAM 24. The CPU 20 reads out a corresponding character dot pattern from the character dot pattern memory 22 using the character code stored in the reception buffer of the RAM 24 as an address, and stores the readout character dot pattern in the printing buffer of the RAM 24. Then, this character dot pattern is read out from the RAM 24, and is supplied to the printing head driver 25 so as to be printed by the printing head 26.

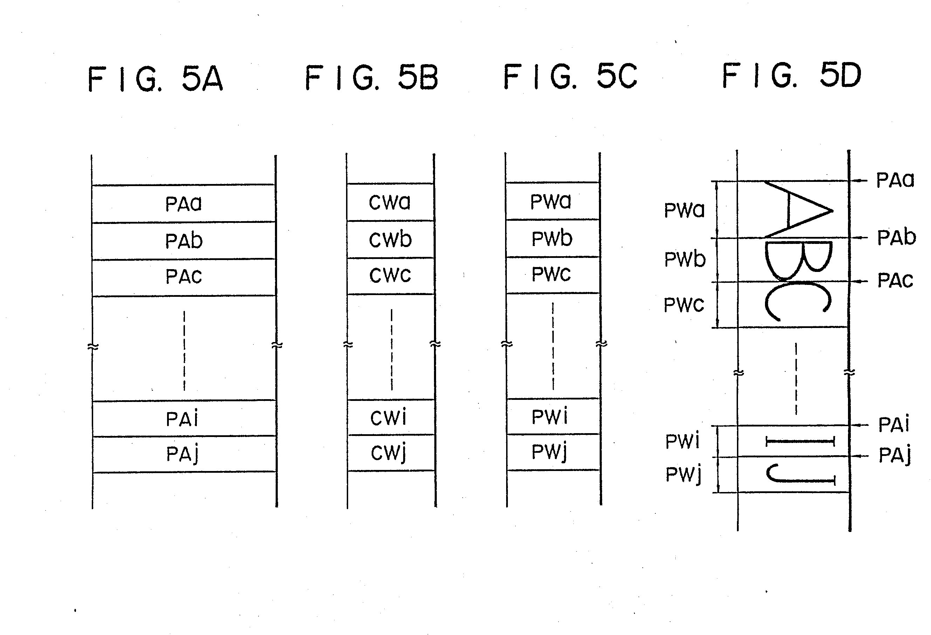

Fig. 4 shows characters printed in the embodiment of Fig. 3. Printing widths of the character dot patterns are respectively indicated by CWa and CWb in Fig. 4. Character dot pattern sizes are lengths respectively indicated by PWa and PWb. The character dot patterns of the character dot pattern sizes defined in Fig. 4 are stored in the character dot pattern storing area, as shown in Fig. 5D. Start addresses in the character dot pattern memory 22 which stores the respective character dot patterns are stored in the start address storing area thereof, as shown in Fig. 5A. The printing widths of the character dot patterns defined in Fig. 4 are stored in the printing width storing area, as shown in Fig. 5B. The character dot pattern sizes defined in Fig. 4 are stored in the character dot pattern size storing area, as shown in Fig. 5C. The printing buffer of the RAM 24 has a memory area for storing the character dot patterns of at least one line, and a storing area (table) for temporarily storing control data including character dot pattern sizes and the printing widths of character dot patterns among printing data.

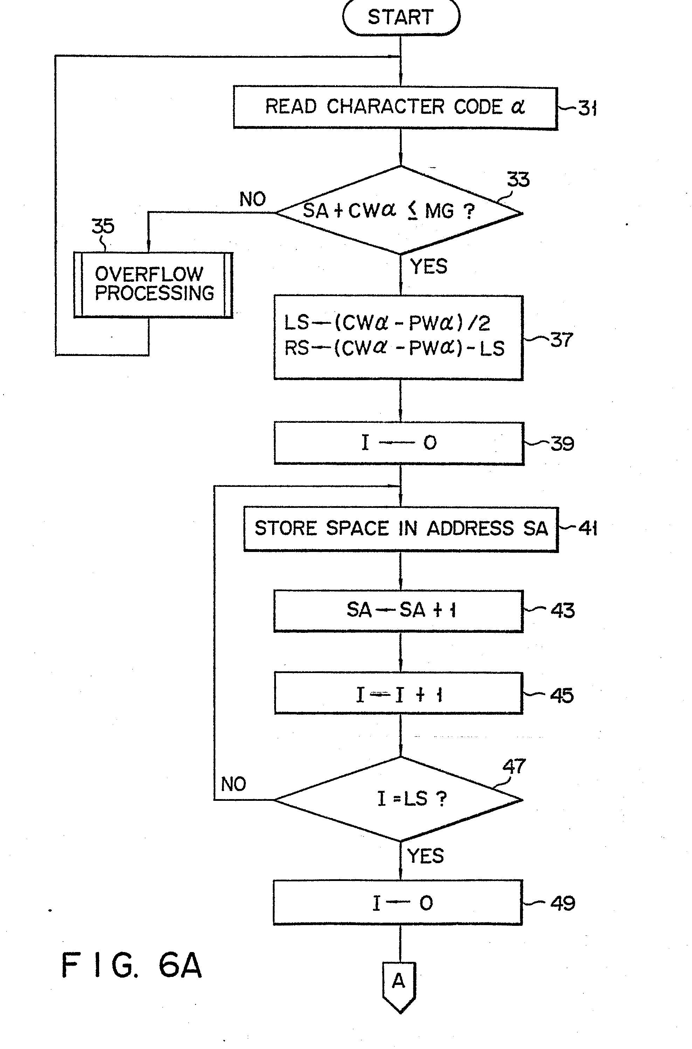

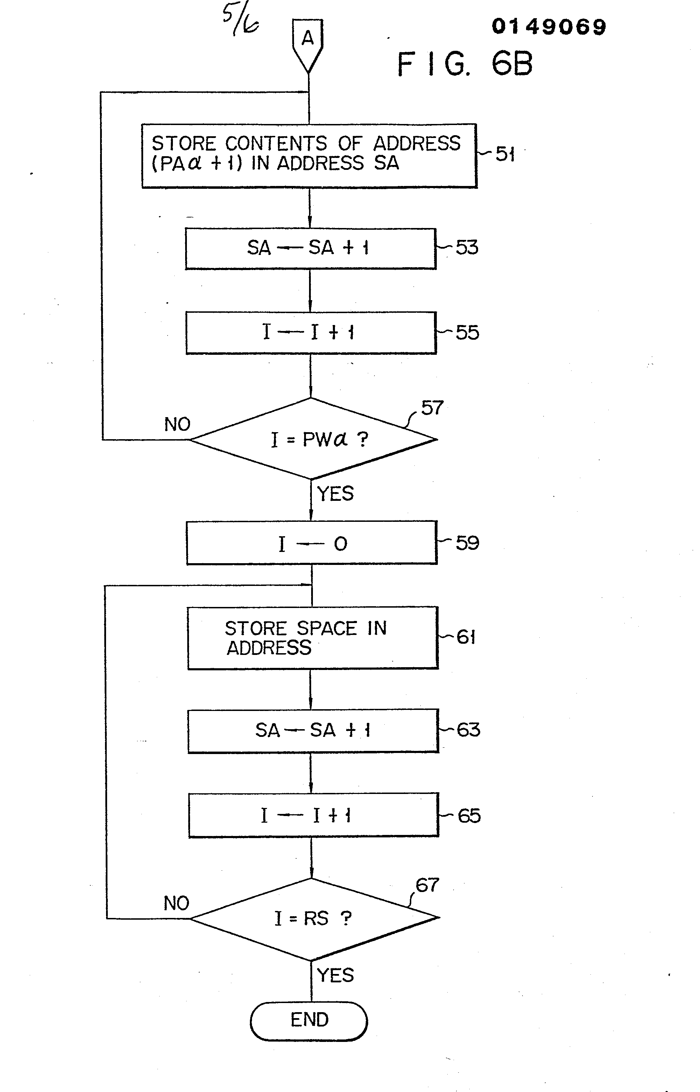

The operation of the character dot pattern device having the above configuration will be described with reference to the flow charts of Figs. 6A and 6B.

The printing data is transmitted from the host computer through the interface 27 and is stored in the reception buffer of the RAM 24. This printing data consists of the character codes and the control data.

In step 31, the CPU 20 reads a character code $\alpha$ from the reception buffer of the RAM 24. In step 33, the CPU 20 determines whether or not an overflow occurs by a character dot pattern corresponding to this character code $\alpha$. In other words, when the character dot pattern corresponding to the received character code $\alpha$ is printed, the CPU 20 determines whether or not it can be printed within one line. It should be noted that, in step 33, SA is an address of the printing buffer of the RAM 24, $CW\alpha$ is a printing width of the character dot pattern corresponding to the character code $\alpha$, and MG is a margin of an address when the overflow occurs. If NO is determined in step 33, overflow processing such as line feeding is performed in step 35. If YES is determined in step 33, the CPU 20 reads out a printing width $CW\alpha$ and a character dot

pattern size PWα corresponding to the character code α from the printing width storing area and character pattern size storing area, respectively, and calculates left and right space width data LS and RS necessary for printing the character dot pattern corresponding to the character code α with reference to these values CWα and PWα in step 37. In steps 39 to 47, the CPU 20 stores the left space width data LS in the address SA of the printing buffer of the RAM 24 in correspondence to the calculated left space width LS.

Then, in steps 49 to 57, the CPU 20 reads out the start address of the area in which the character dot pattern corresponding to the character code α is stored from the start address storing area of the character dot pattern memory 22. Then, with reference to this address, the character dot pattern (start address PAα) corresponding to the character code α is read out from the character dot pattern memory 22, and is sequentially stored at the address SA of the printing buffer of the RAM 24. As a result, the left space width data LS and the character dot pattern are sequentially stored at a predetermined location starting from the address SA of the printing buffer of the RAM 24. Furthermore, in steps 59 to 67, the CPU 20 stores the right space width data RS at the address SA of the printing buffer of the RAM 24 in correspondence to the calculated right space width RS. Then, the left space width data, the character dot pattern, and the right space width data are stored in the printing buffer of the RAM 24. The next character code is read out from the reception buffer of the RAM 24, and the left space width data, the character dot pattern, and the right space width data corresponding to this character code are stored in the printing buffer of the RAM 24 in the same manner as described above.

In this manner, when the character dot patterns for one line are stored in the printing buffer of the RAM

- 7 -                    0149069

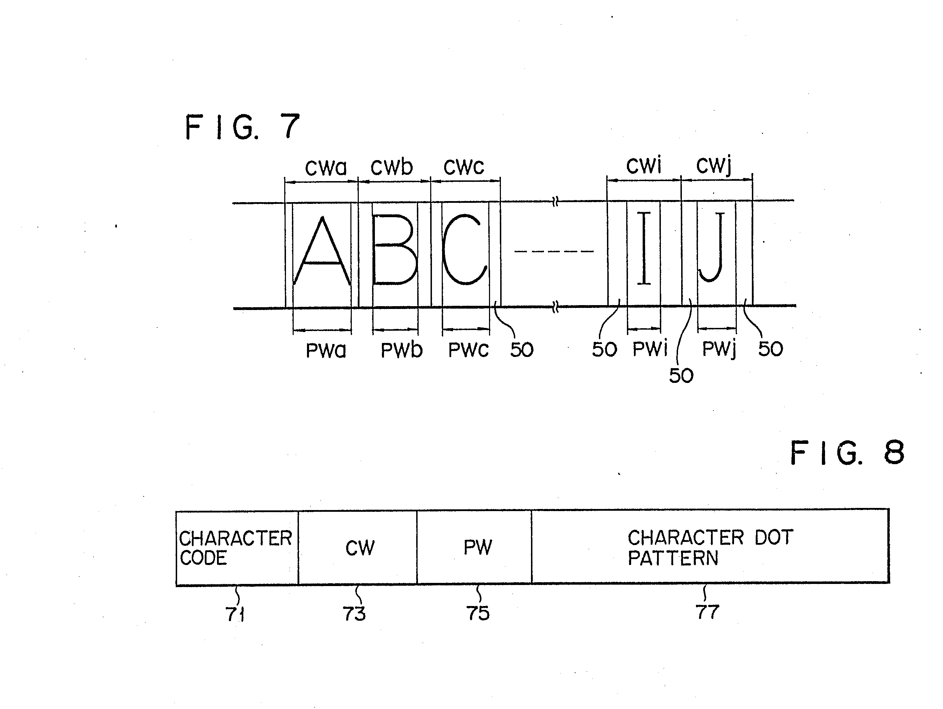

24, the CPU 20 controls the printing head driver 25, thereby performing the printing operation. The printing head driver 25 drives the printing head 26 so as to perform the printing operation in correspondence to the character dot patterns in the printing buffer of the RAM 24. As a result, for example, character dot patterns are printed, as shown in Fig. 7. In this case, as shown in Fig. 7, the respective character dot patterns are printed so as to include the character dot patterns (portions corresponding to the character widths PWa through PWj) and necessary left and right spaces 50 in correspondence to the respective printing widths CWa to CWj. The left and right spaces necessary for printing are added when the character dot pattern is stored in the printing buffer of the RAM 24 as described above. Therefore, only minimum character dot patterns can be stored in the character dot pattern memory 22. As a result, space data need not be stored in the character dot pattern memory 22, thereby considerably reducing the storing area. In other words, the number of character dot patterns which can be stored in the same storing area can be increased, thereby improving the efficiency of the memory.

Since the printing width including spaces can be easily set in the printing buffer, control of proportional spacing, that is, control of printing the respective characters so that they have predetermined spaces can be easily performed.

In addition, since the size of a character dot pattern without the spaces at the right and left sides can easily be obtained from the character dot pattern size PW, a printing pitch can be specified, independent of the printing width CW or the character dot pattern size PW. Moreover, when applied to a printer which cannot carry out continuous dot printing for certain dot patterns, the character pattern processing device according to the embodiment can easily judge whether a separate processing is necessary to avoid character pattern overlapping or it is possible to continue printing the next dot pattern.

In the above embodiment, character dot patterns are stored in the ROM provided in the printer. However, the character dot patterns can be transmitted from an external unit to the RAM in the printer, and stored therein. In this case, a RAM for storing the character dot patterns is provided instead of the memory 22. Printing data which includes a character code 71, a printing width CW 73, a character dot pattern size PW 75 and a character dot pattern 77, as shown in Fig. 8, is transmitted and stored in this RAM, and the character dot pattern is registered therein. When character codes to be printed are transmitted from a host computer, the same printing operation as described above is performed using this RAM.

In the above embodiments, the present invention is applied to the printer. However, the present invention is not limited to this. For example, the present invention can be adopted in a display device such as a CRT. Furthermore, the start address storing area for the character dot pattern shown in Fig. 5A is not always needed. For example, the CPU 20 can calculate the start addresses PAa to PAj with reference to the sizes PWa to PWj of the respective character dot patterns.

Claims:

1.  A character dot pattern processing device in a character output apparatus according to the present invention, comprising:

memory means (22, 24) for storing a character dot pattern consisting of only a dot pattern which constitutes a character, a pattern size of the character dot pattern, and a character output width when the character dot pattern is supplied to said character output apparatus; and

controlling means (20, 21) for adding predetermined dot space patterns at two sides of the character dot pattern stored in said memory means in accordance with the character output width stored in said memory means so as to generate the character dot pattern having the predetermined space dot patterns to said character output apparatus.

2.  A character dot pattern processing device according to claim 1, characterized in that said memory means is a read-only memory (22).

3.  A character dot pattern processing device according to claim 1, further comprising an interface (27) for controlling communication of data; and wherein said memory means comprises a random-access memory (24), and the character dot pattern, the pattern size and the character output width are stored in said random-access memory through said interface.

4.  A character dot pattern processing device according to claim 1, characterized in that said memory means comprises a read-only memory for storing a predetermined character dot pattern, pattern size and character output width, and a random-access memory for storing an arbitrary character dot pattern, pattern size and character output width.

5.  A character dot pattern processing device according to claim 1, characterized in that said controlling means comprises a programmable microprocessor which is connected to said character output apparatus and said memory means and includes a logic device (20) for receiving a signal for controlling said character output apparatus and for reading out said memory means and a read-only memory device (21) for storing a permanent program having processing procedures of said logic device so as to perform a predetermined operation of said controlling means; and wherein said memory means and said character output apparatus are controlled so as to add the predetermined space dot patterns to the two sides of the character dot pattern stored in said memory means in accordance with the character output width stored in said memory means and to supply the character dot pattern having the predetermined space dot patterns to said character output apparatus.

6.  A character dot pattern processing method in a character output apparatus, comprising the steps of:

a)  the step (37) of reading out an output width (CW) of a character dot pattern and a character dot pattern size (PW) prestored in a memory, and calculating left and right space widths (LS, RS) necessary when the character dot pattern is supplied to said character output apparatus;

b)  the step (39 to 47) of storing the left space width data in a character output buffer in correspondence to the left space width calculated in said step a;

c)  the step (49 to 57) of reading out the character dot pattern from said memory so as to store the readout character dot pattern in said character output buffer; and

d)  the step (59 to 67) of storing the right space width data in said character output buffer in correspondence to the right space width calculated in said step a.

## F I G. 1

10

| A | B | C | | I | J | | Z |

|←CW→|←CW→|←CW→| |←CW→|←CW→| |←CW→|

## F I G. 2A

## F I G. 2B

# FIG. 3

# FIG. 4

# FIG. 5A  FIG. 5B  FIG. 5C  FIG. 5D

| | |
|---|---|
| PAα | |
| PAb | |
| PAC | |
| ⋮ | |
| PAi | |
| PAj | |

| | |
|---|---|
| CWα | |
| CWb | |
| CWC | |
| ⋮ | |
| CWi | |
| CWj | |

| | |
|---|---|
| PWα | |
| PWb | |
| PWC | |
| ⋮ | |
| PWi | |
| PWj | |

FIG. 5D

PWα — PAα
PWb — PAb
PWC — PAC
⋮
PWi — PAi
PWj — PAj

ABC ... IJ

3/6

0149069

START

READ CHARACTER CODE $\alpha$ — 31

SA + CW$\alpha$ $\leq$ MG ? — 33

NO

35

OVERFLOW PROCESSING

YES

LS — (CW$\alpha$ - PW$\alpha$)/2
RS — (CW$\alpha$ - PW$\alpha$) - LS — 37

I — 0 — 39

STORE SPACE IN ADDRESS SA — 41

SA — SA + 1 — 43

I = I + 1 — 45

I = LS ? — 47

NO

YES

I — 0 — 49

F I G. 6A

A

F I G. 6B

```
                          ( A )

        ┌─────────────────────────────┐
        │ STORE CONTENTS OF ADDRESS    │── 51
        │ (PAα + 1) IN ADDRESS SA      │
        └─────────────────────────────┘
                      │
        ┌─────────────────────────────┐
        │        SA ─ SA + 1           │── 53
        └─────────────────────────────┘
                      │
        ┌─────────────────────────────┐
        │         I ─ I + 1            │── 55
        └─────────────────────────────┘
                      │
    NO           ◇ I = PWα ? ◇── 57
                      │
                     YES
                      │
        ┌─────────────────────────────┐
        │          I ─ O               │── 59
        └─────────────────────────────┘
                      │
        ┌─────────────────────────────┐
        │      STORE SPACE IN          │── 61
        │        ADDRESS               │
        └─────────────────────────────┘
                      │
        ┌─────────────────────────────┐
        │        SA ─ SA + 1           │── 63
        └─────────────────────────────┘
                      │
        ┌─────────────────────────────┐
        │         I ─ I + 1            │── 65
        └─────────────────────────────┘
                      │
    NO            ◇ I = RS ? ◇── 67
                      │
                     YES
                      │
                 ( END )
```

# FIG. 7

# FIG. 8

| CHARACTER CODE | CW | PW | CHARACTER DOT PATTERN |
|---|---|---|---|
| 71 | 73 | 75 | 77 |

0149069